# EUROPÄISCHE PATENTSCHRIFT

(11) **EP 1 117 739 B1**
(45) Veröffentlichungstag und Bekanntmachung des Hinweises auf die Patenterteilung: **11.12.2002**
(21) Anmeldenummer: 99944377.3
(22) Anmeldetag: 11.08.1999
(51) Int. Cl.: C08L 67/00, C08K 13/04

(54) **FLAMMGESCHÜTZTE POLYESTERFORMMASSEN**
FLAMEPROOF POLYESTER MOLDING MATERIALS
MATIERES MOULABLES A BASE DE POLYESTER IGNIFUGEES

(30) Priorität: 19.08.1998 DE 19837687
(43) Veröffentlichungstag der Anmeldung: 25.07.2001
(73) Patentinhaber: BASF AKTIENGESELLSCHAFT, 67056 Ludwigshafen (DE)
(72) Erfinder: KLATT, Martin, D-68165 Mannheim (DE); NAM, Michael, 80992 München (DE)
(86) Internationale Anmeldenummer: EP9905904
(87) Internationale Veröffentlichungsnummer: WO00011085

(56) Entgegenhaltungen:
- EP-A- 0 522 397
- EP-A- 0 611 798
- EP-A- 0 903 370
- WO-A-98/17720
- PATENT ABSTRACTS OF JAPAN vol. 1997, no. 10, 31. Oktober 1997 (1997-10-31) & JP 09 157503 A (MITSUBISHI CHEM CORP), 17. Juni 1997 (1997-06-17) in der Anmeldung erwähnt
- PATENT ABSTRACTS OF JAPAN vol. 018, no. 485 (C-1248), 9. September 1994 (1994-09-09) & JP 06 157880 A (MITSUBISHI PETROCHEM CO LTD), 7. Juni 1994 (1994-06-07) in der Anmeldung erwähnt

## Beschreibung

Die Erfindung betrifft Thermoplastische Formmassen, enthaltend

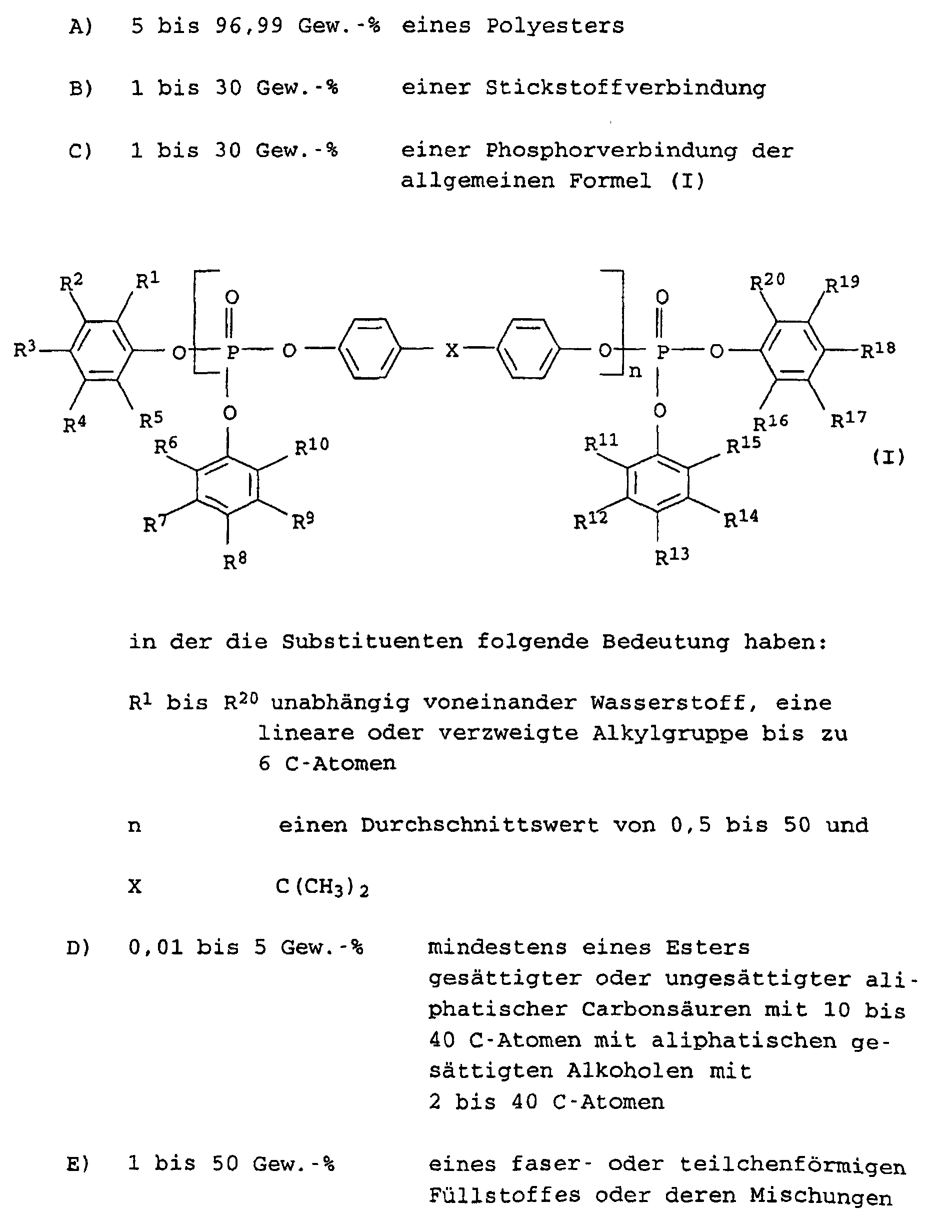

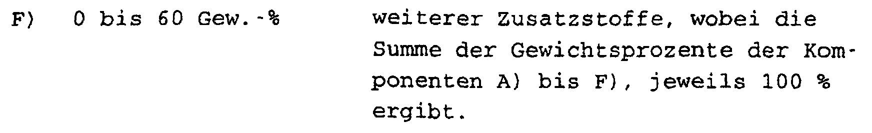

Weiterhin betrifft die Erfindung die Verwendung der erfindungsgemäßen Formmassen zur Herstellung von Fasern, Folien und Formkörpern sowie die hierbei erhältlichen Formkörper jeglicher Art.

Es besteht ein zunehmendes Marktinteresse für halogenfrei flammgeschützte Polyester. Wesentliche Anforderungen an das Flammschutzmittel sind: helle Eigenfarbe, ausreichende Temperaturstabilität für die Einarbeitung in Thermoplaste, sowie dessen Wirksamkeit in verstärktem und unverstärktem Polymer (sog. Dochteffekt bei Glasfasern).

Dabei sollte der Brandtest für unverstärkte Polyester gemäß UL 94 mit V-O bestanden werden. Für verstärkte Polyester sollte zumindest die Klassifizierung V2 und/oder der Glühdrahttest bestanden werden.

Aus der JP-A 08/269 306 und JP-A 09/157 503 sind Polyesterflammschutzkombinationen aus Melamincyanurat (MC), Phosphorsäureestern und Entformungsmitteln bekannt, welche weniger als 10 Gew.-% Glasfasern enthalten können. Die mechanischen Eigenschaften und Flammschutzeigenschaften derartiger Formmassen sind verbesserungswürdig.

Aus der JP-A 06/157 880 und WO 97/0 57 05 sind faserverstärkte Polyesterformmassen bekannt, welche MC oder verbrückte Bisphenole als Flammschutzmittel enthalten. Nachteilig bei diesen Formmassen sind hohe Phenolwerte (Migration des Additivs) sowie Formbelag und Braunfärbung bei der Verarbeitung.

Der vorliegenden Erfindung lag daher die Aufgabe zugrunde, flammfeste Polyesterformmassen zur Verfügung zu stellen, welche gemäß UL 94 eine ausreichende Klassifizierung erzielen und den Glühdrahttest bestehen. Dabei sollte der Formbelag minimiert werden und die Fließfähigkeit bei der Verarbeitung verbessert werden.

Weiterhin soll die thermische Stabilität bei der Verarbeitung und die thermische Langzeitstabilität, insbesondere bei erhöhter Gebrauchstemperatur, verbessert werden.

Darüberhinaus sollen die Formmassen eine helle Eigenfarbe und gute mechanische Eigenschaften aufweisen.

Demgemäß wurden die eingangs definierten thermoplastischen Formmassen gefunden. Bevorzugte Ausführungsformen sind den Unteransprüchen zu entnehmen.

Als Komponente (A) enthalten die erfindungsgemäßen Formmassen 5 bis 96,99, bevorzugt 10 bis 82,95 und insbesondere 10 bis 69,9 Gew.-% eines thermoplastischen Polyesters.

Allgemein werden Polyester auf Basis von aromatischen Dicarbonsäuren und einer aliphatischen oder aromatischen Dihydroxyverbindung verwendet.

Eine erste Gruppe bevorzugter Polyester sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1.4-Cyclohexandiol, 1,4-Cyclohexandimethylanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.-%, vorzugsweise bis zu 0,75 Gew.-% 1,6-Hexandiol und/oder 5-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Formmassen enthalten als Komponente A) eine Mischung aus Polyethylenterephthalat (PET) und Polybutylenterephthalat (PBT). Der Anteil des Polyethylenterephthalates beträgt vorzugsweise in der Mischung bis zu 50, insbesondere 10 bis 30 Gew.-%. bezogen auf 100 Gew.-% A).

Derartige erfindungsgemäße Formmassen zeigen sehr gute Flammschutzeigenschaften und bessere mechanische Eigenschaften.

Weiterhin ist es vorteilhaft PET Rezyklate (auch scrap-PET genannt) in Mischung mit Polyalkylenterephthalaten wie PBT einzusetzen.

Unter Rezyklaten versteht man im allgemeinen:
1) sog. Post Industrial Rezyklat: hierbei handelt es sich um Produktionsabfälle bei der Polykondensation oder bei der Verarbeitung z.B. Angüsse bei der Spritzgußverarbeitung, Anfahrware bei der Spritzgußverarbeitung oder Extrusion oder Randabschnitte von extrudierten Platten oder Folien.
2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 6 mm, vorzugsweise kleiner 5 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise 0,01 bis 0,7, insbesondere 0,2 bis 0,6 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol-% Isophthalsäure und 0 bis 95 mol-% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel 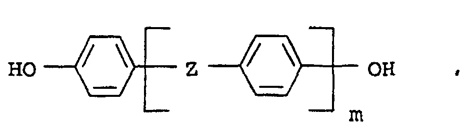 in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch C₁-C₆-Alkyl- oder Alkoxygruppen und Fluor, Chlor oder Brom als Substituenten tragen.

Als Stammkörper dieser Verbindungen seinen beispielsweise
Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di- (hydroxyphenyl)keton,
di-(hydroxyphenyl)sulfoxid,
α,α'-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden
4,4'-Dihydroxydiphenyl,
2,4-Di-(4'-hydroxyphenyl)-2-methylbutan
α,α'-Di-(4-hydroxyphenyl)-p-diisopropylbenzol,
2,2-Di (3'-methyl-4'-hydroxyphenyl)propan und
2,2-Di-(3'-chlor-4'-hydroxyphenyl)propan,
sowie insbesondere
2,2-Di-(4'-hydroxyphenyl)propan
2,2-Di(3',5-dichlordihydroxyphenyl)propan,
1,1-Di- (4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan
oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Unter Polyestern im Sinne der vorliegenden Erfindung sollen auch Polycarbonate verstanden werden, die durch Polymerisation von aromatischen Dihydroxyverbindungen, insbesondere Bis-(4-hydroxyphenyl)2,2-propan (Bisphenol A) oder dessen Derivaten, z.B. mit Phosgen erhältlich sind. Entsprechende Produkte sind an sich bekannt und in der Literatur beschrieben sowie größtenteils auch im Handel erhältlich. Die Menge der Polycarbonate beträgt bis zu 90 Gew.-%, vorzugsweise bis zu 50 Gew.-%, bezogen auf 100 Gew.-% der Komponente (A).

Selbstverständlich können auch Polyesterblockcopolymere wie Copolyetherester verwendet werden. Derartige Produkte sind an sich bekannt und in der Literatur, z.B. in der US-A 3 651 014, beschrieben. Auch im Handel sind entsprechende Produkte erhältlich, z.B. Hytrel® (DuPont).

Als Komponente B) enthalten die erfindungsgemäßen thermoplastischen Formmassen 1 bis 30, bevorzugt 1 bis 20, und insbesondere 5 bis 15 Gew.-% einer Stickstoffverbindung.

Das gemäß der Erfindung (Komponente B) bevorzugt geeignete Melamincyanurat ist ein Reaktionsprodukt aus vorzugsweise äquimolaren Mengen von Melamin (Formel II) und Cyanursäure bzw. Isocyanursäure (Formeln IIa und IIb)

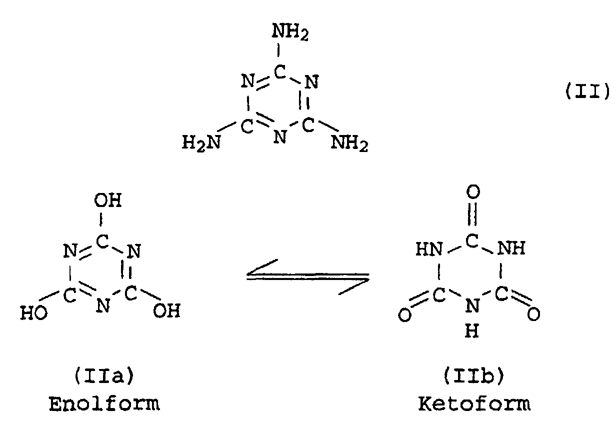

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße d₅₀ von 1,5 - 7 µm.

Weitere geeignete Verbindungen (oft auch als Salze oder Addukte bezeichnet) sind Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2).

Geeignete Guanidinsalze sind

| | CAS-Nr. |
|---|---|
| G-carbonat | 593-85-1 |
| G-cyanurat prim. | 70285-19-7 |
| G-phosphat prim. | 5423-22-3 |
| G-phosphat sec. | 5423-23-4 |
| G-sulfat prim. | 646-34-4 |
| G-sulfat sec. | 594-14-9 |
| Pentaerythritborsäureguanidin | N.A. |
| Neopentylglycolborsäureguanidin | N.A. |
| sowie Harnstoffphosphat grün | 4861-19-2 |
| Harnstoffcyanurat | 57517-11-0 |
| Ammelin | 645-92-1 |
| Ammelid | 645-93-2 |
| Melem | 1502-47-2 |
| Melon | 32518-77-7 |

Unter Verbindungen im Sinne der vorliegenden Erfindung sollen sowohl z.B. Benzoguanamin selbst und dessen Addukte bzw. Salze als auch die am Stickstoff substituierten Derivate und dessen Addukte bzw. Salze verstanden werden.

Weiterhin geeignet sind Ammoniumpolyphosphat (NH₄PO₃)ₙ mit n ca. 200 bis 1000 bevorzugt 600 bis 800, und Tris(hydroxyethyl)isocyanurat (THEIC) der Formel III 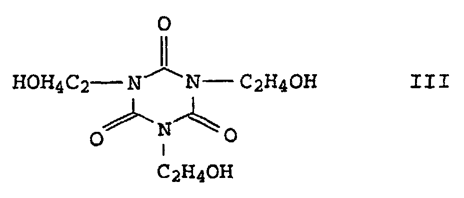 oder dessen Umsetzungsprodukte mit aromatischen Carbonsäuren Ar(COOH)ₘ, welche gegebenenfalls in Mischung miteinander vorliegen können, wobei Ar ein ein-, zwei- oder dreikerniges aromatisches Sechsringsystem bedeutet und m 2, 3 oder 4 ist.

Geeignete Carbonsäuren sind beispielsweise Phthalsäure, Isophthalsäure, Terephthalsäure, 1,3,5-Benzoltricarbonsäure, 1,2,4-Benzoltricarbonsäure, Pyromellithsäure, Mellophansäure, Prehnitsäure, 1-Naphthoesäure, 2-Naphthoesäure. Naphthalindicarbonsäuren und Anthracencarbonsäuren.

Die Herstellung erfolgt durch Umsetzung des Tris(hydroxyethyl)isocyanurats mit den Säuren, ihren Alkylestern oder ihren Halogeniden gemäß den Verfahren der EP-A 584 567.

Derartige Umsetzungsprodukte stellen ein Gemisch von monomeren und oligomeren Estern dar, welche auch vernetzt sein können. Der oligomerisierungsgrad beträgt üblicherweise 2 bis ca. 100, vorzugsweise 2 bis 20. Bevorzugt werden Mischungen von THEIC und/oder dessen Umsetzungsprodukte mit phosphorhaltigen Stickstoffverbindungen, insbesondere (NH₄PO₃)ₙ oder Melaminpyrophosphat oder polymeres Melaminphosphat eingesetzt. Das Mischungsverhältnis z.B. von (NH₄PO₃)ₙ zu THEIC beträgt vorzugsweise 90 bis 50 zu 10 bis 50, insbesondere 80 bis 50 zu 50 bis 20 Gew.-%, bezogen auf die Mischung derartiger Komponenten B).

Weiterhin geeignet sind Benzoguanamin-Verbindungen der Formel IV 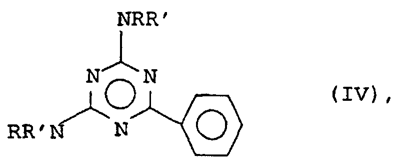 in der R,R' geradkettige oder verzweigte Alkylreste mit 1 bis 10 C-Atomen, bevorzugt Wasserstoff bedeutet und insbesondere deren Addukte mit Phosphorsäure, Borsäure und/oder Pyrophosphorsäure.

Bevorzugt sind ferner Allantoin-Verbindungen der Formel V 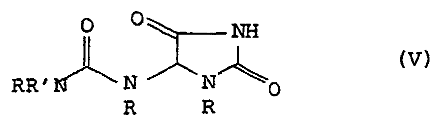 wobei R,R' die in Formel IV angegebene Bedeutung haben sowie deren Salze mit Phosphorsäure, Borsäure und/oder Pyrophosphorsäure sowie Glycolurile der Formel VI oder dessen Salze mit den o.g. Säuren 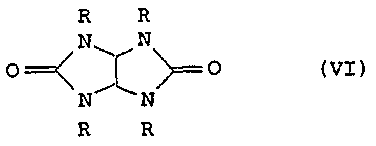 in der R die in Formel IV genannte Bedeutung hat.

Geeignete Produkte sind im Handel oder gemäß DE-A 196 14 424 erhältlich.

Das gemäß der Erfindung verwendbare Cyanguanidin (Formel VII) erhält man z.B. durch Umsetzung von Kalkstickstoff (Calciumcyanamid) mit Kohlensäure, wobei das entstehende Cyanamid bei pH 9 bis 10 zu Cyanguanidin dimerisiert.

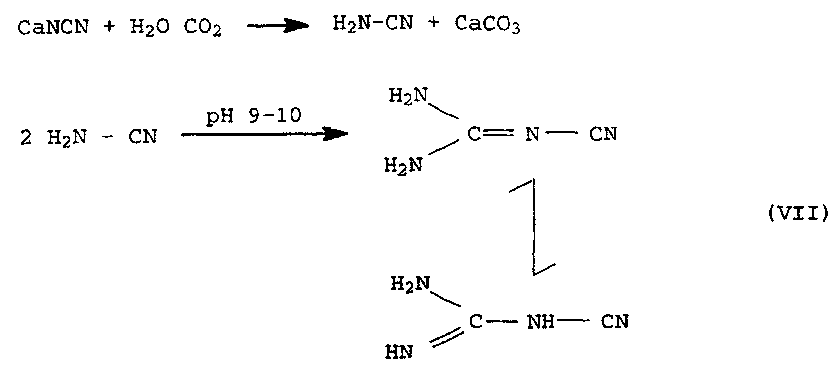

Das im Handel erhältliche Produkt ist ein weißes Pulver mit einem Schmelzpunkt von 209°C bis 211°C.

Als Komponente C) enthalten die erfindungsgemäßen Formmassen 1 bis 30, vorzugsweise 1 bis 20 und insbesondere 1 bis 10 Gew.-% einer Phosphorverbindung der allgemeinen Formel (I). 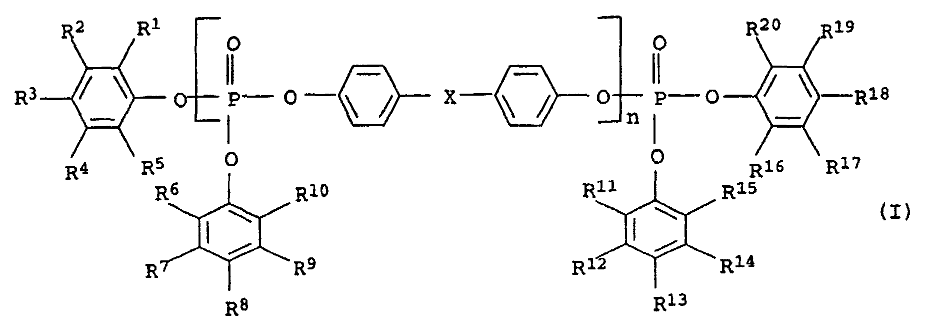 in der die Substituenten folgende Bedeutung haben:
- R¹ bis R²⁰: unabhängig voneinander Wasserstoff, eine lineare oder verzweigte Alkylgruppe bis zu 6 C-Atomen
- n: einen Durchschnittswert von 0,5 bis 50 und
- X: C(CH₃)₂

Bevorzugte Verbindungen C) sind solche, in denen R¹ bis R²⁰ unabhängig voneinander Wasserstoff und/oder einen Methylrest bedeuten. Für den Fall, daß R¹ bis R²⁰ unabhängig voneinander einen Methylrest bedeuten, sind solche Verbindungen C) bevorzugt, in welchen die Reste R¹, R⁵, R⁶, R¹⁰, R¹¹, R¹⁵, R¹⁶, R²⁰ in ortho Stellung zum Sauerstoff der Phosphatgruppe mindestens einen Methylrest darstellen. Weiterhin bevorzugt sind Verbindungen C) in denen pro aromatischem Ring eine Methylgruppe, vorzugsweise in ortho-Stellung vorhanden ist und die anderen Reste Wasserstoff bedeuten.

n beträgt vorzugsweise als Durchschnittswert 0,5 bis 5, insbesonder 0,7 bis 2 und insbesondere ≈ 1.

Die Angabe von n als Durchschnittswert ergibt sich durch das Hersellverfahren der oben aufgeführten Verbindungen, so daß der Oligomerisierungsgrad meist kleiner 10 beträgt und geringe Anteile (meist < 5 Gew.-%) an Triphenylphosphat enthalten sind, wobei dies von Charge zu Charge unterschiedlich ist. Die Verbindungen C) sind als CR - 741 der Firma Daihachi im Handel erhältlich.

Als Komponente D) enthalten die erfindungsgemäßen Formmassen 0,01 bis 5, vorzugsweise 0,05 bis 3 und insbesondere 0,1 bis 2 Gew.-% mindestens eines Esters gesättigter oder ungesättigter aliphatischer Carbonsäuren mit 10 bis 40, bevorzugt 16 bis 22 C-Atomen mit aliphatischen gesättigten Alkoholen mit 2 bis 40, vorzugsweise 2 bis 6 C-Atomen.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Es können auch Mischungen verschiedener Ester eingesetzt werden, wobei das Mischungsverhältnis beliebig ist.

Als faser- oder teilchenförmige Füllstoffe E) seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen von 1 bis 50, insbesondere 15 bis 40 % und insbesondere 20 bis 35 Gew.-% eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

(X- (CH₂)ₙ)ₖ-Si- (O-CₘH₂ₘ₊₁)₄₋ₖ

in der die Substituenten folgende Bedeutung haben:
- X: 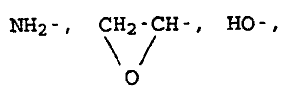
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf E) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente F) können die erfindungsgemäßen Formmassen 0 bis 60, insbesondere bis zu 50 Gew.-% weiterer Zusatzstoffe enthalten.

Übliche Zusatzstoffe F) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.-0^{2.6})-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²)=C(COOR³)R⁴ (I)

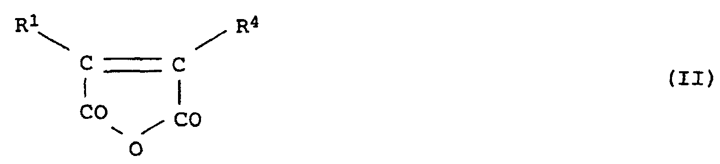

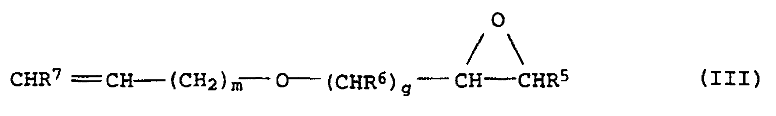

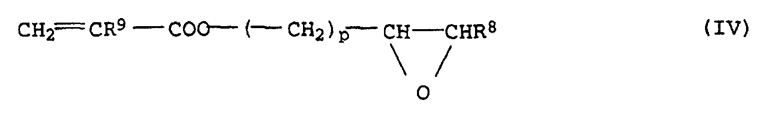

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| | |
| 0,1 bis 40, | insbesondere 0,3 bis 20 Gew.-% Glycidylacrylat und/ oder Glycidylmethacrylat, (Meth)acrylsäure und/oder Maleinsäureanhydrid, und |
| | |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 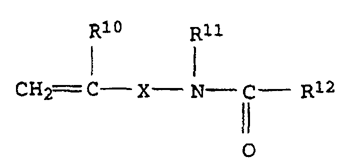 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 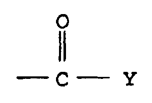
- Y: O-Z oder NH-Z und
- Z: eine C₁- bis G₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich. ABS/ASA-Mischungen mit Polycarbonaten sind unter dem Warenzeichen Terblend® (BASF AG) im Handel erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylatoder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente F) können die erfindungsgemäßen thermoplastischen Formmassen weitere Zusatzstoffe, insbesondere Verarbeitungshilfsmittel wie Stabilisatoren, Oxidationsverzögerer, Mittel gegen Wärmezersetzung und Zersetzung durch ultraviolettes Licht, Gleit- und Entformungsmittel (verschieden von D)), Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Gleit- und Entformungsmittel, welche verschieden von E) sind und üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße d₅₀ (Zahlenmittelwert) im Bereich von 0,05 bis 10 µm, insbesondere von 0,1 bis 5 µm auf. Diese geringen Teilchengrößen lassen sich besonders bevorzugt durch Verwendung von wäßrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer bevorzugten Arbeitsweise können die Komponenten B) bis E) sowie gegebenenfalls übliche Zusatzstoffe F) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute mechanische Eigenschaften und gute Flammschutzeigenschaften bei gleichzeitig bestandenem Glühdrahttest aus. Die Verarbeitung erfolgt weitestgehend ohne Veränderung der Polymermatrix und verbesserter Fließfähigkeit und der Formbelag wird stark reduziert. Weiterhin zeigt die erfindungsgemäße Kombination eine gute thermische Langzeitstabilität, insbesondere auch bei hohen Gebrauchstemperaturen und eine helle Eigenfarbe. Sie eignen sich zur Herstellung von Fasern, Folien und Formkörpern, insbesondere für Anwendungen im Elektro- und Elektronikbereich. Diese Anwendungen sind insbesondere Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

### Beispiele

### Es wurden folgende Komponenten eingesetzt

Komponente A/1: Polybutylenterephthalat mit einer Viskositätszahl von 130 ml/g und einem Carboxylendgruppengehalt von 34 mval/kg (Ultradur® B 4500 der BASF AG) (VZ gemessen in 0,5 gew.-%iger Lösung aus Phenol/o-Dichlorbenzol, 1:1-Mischung bei 25°C gemäß ISO 1628).
- Komponente A/2:: Polyethylenterephtalat (PET) mit einer VZ von 76 ml/g
- Komponente A/3:: Polycarbonat aus Bisphenol A mit einer VZ von 59 ml/g (Lexan® 161 der Firma General Electric Plastics B.V.)
- Komponente B/1:: Melamincyanurat
- Komponente C/1:: Bisphenol-A-bis(diphenylphosphat) erhältlich durch Umsetzung von Bisphenol A mit Phosphorsäurediphenylesterchlorid 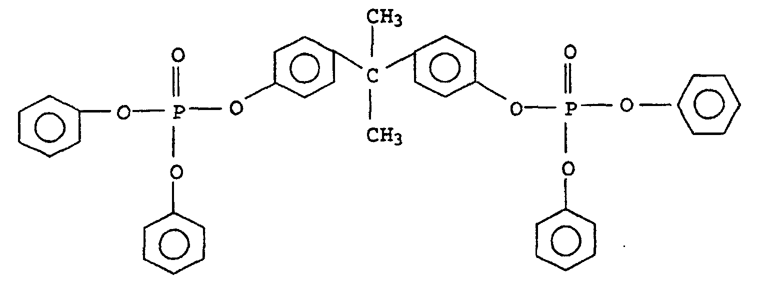
- Komponente C/1V:: Resorcinol-bis (diphenylphosphat) (CR 733-S der Fa. Daihachi)
- Komponente D:: Pentherythrittetrastearat
- Komponente E :: Schnittglasfaser mit einer Dicke von 10 µm (epoxisilanisierte Schlichte).

Die Komponenten A) bis E) wurden auf einem Zweischneckenextruder bei 250 bis 260°C abgemischt und in ein Wasserbad extrudiert. Nach Granulierung und Trocknung wurden auf einer Spritzgußmaschine Prüfkörper gespritzt und geprüft.

Für den Brandtest wurden Stäbe abgespritzt und nach üblicher Konditionierung entsprechend UL 94 geprüft. Der Glühdrahttest erfolgte an Plättchen 60/60 mm mit 1 und 3 mm Dicke. Geprüft wurde bei 960°C Drahttemperatur.

Zur Untersuchung der Migration wurden Prüfstäbe gemäß ISO 179 (Schlagbiegestab) hergestellt und 3 Tage bei 150°C getempert. Danach wurde der Gewichtsverlust gemessen.

Die Stabilität wurde durch Untersuchung der VZ von Formteilen vor und nach Lagerung bei 130°C (10 Tage) bestimmt. Zusätzlich wurde der E-Modul in MPa nach ISO 527, Reißspannung in MPa nach ISO 527, Schlagzähigkeit in kJ/m² nach ISO179/1eU, VZ nach ISO 1628 in ml/g gemessen.

Die Zusammenfassung der Formmassen und die Ergebnisse der Messungen sind der Tabelle zu entnehmen.

| Versuch | 1 | 2 | 3 | 5 | 6 | V1 | V2 | V3 | V4 |
|---|---|---|---|---|---|---|---|---|---|
| A1 [Gew.-%] | 44,7 | 39,7 | 54,7 | 19,7 | 19,7 | 44,7 | 40 | 59,7 | 54,7 |
| A2 [Gew.-%] | | | | 20 | | | | | |
| A3 [Gew.-%] | | | | | 20 | | | | |
| B [Gew.-%] | 10 | 15 | 10 | 10 | 10 | 10 | 15 | 10 | 10 |
| C/1 [Gew.-%] | 15 | 15 | 15 | 15 | 15 | | 15 | 15 | 15 |
| C/1V [Gew.-%] | | | | | | 15 | | | |
| D [Gew.-%] | 0,3 | 0,3 | 0,3 | 0,3 | 0,3 | 0,3 | 0 | 0,3 | 0,3 |
| E [Gew.-%] | 30 | 30 | 20 | 30 | 30 | 30 | 30 | 15 | 10 |
| E-Modul | 7600 | 7900 | 6200 | 8300 | 8300 | 7100 | 7900 | 5100 | 3500 |
| Spannung | 87 | 82 | 73 | 92 | 92 | 84 | 81 | 67 | 54 |
| Schlagz. | 48 | 41 | 44 | 43 | 49 | 44 | 37 | 41 | 37 |
| UL 94, 1,6mm | V2 | V1 | V2 | V1 | V0 | V2 | V1 | n.k. | n.k. |
| UL 94, 0,8mm | V2 | V2 | V2 | V2 | V2 | V2 | V2 | V2 | V2 |
| 960°C 1/3 mm | +/+ | +/+ | +/+ | +/+ | +/+ | +/+ | +/+ | -/+ | -/+ |
| Phenol (ppm) | <80 | <80 | <80 | <80 | <80 | 105 | 100 | <80 | <80 |
| VZ (ml/g) 0 Tage | 109 | 103 | 112 | 102 | 100 | 102 | 100 | 113 | 112 |
| VZ (ml/g) 10 Tage | 114 | 107 | 115 | 103 | 102 | 89 | 108 | 115 | 114 |

## Patentansprüche

1. Thermoplastische Formmassen, enthaltend

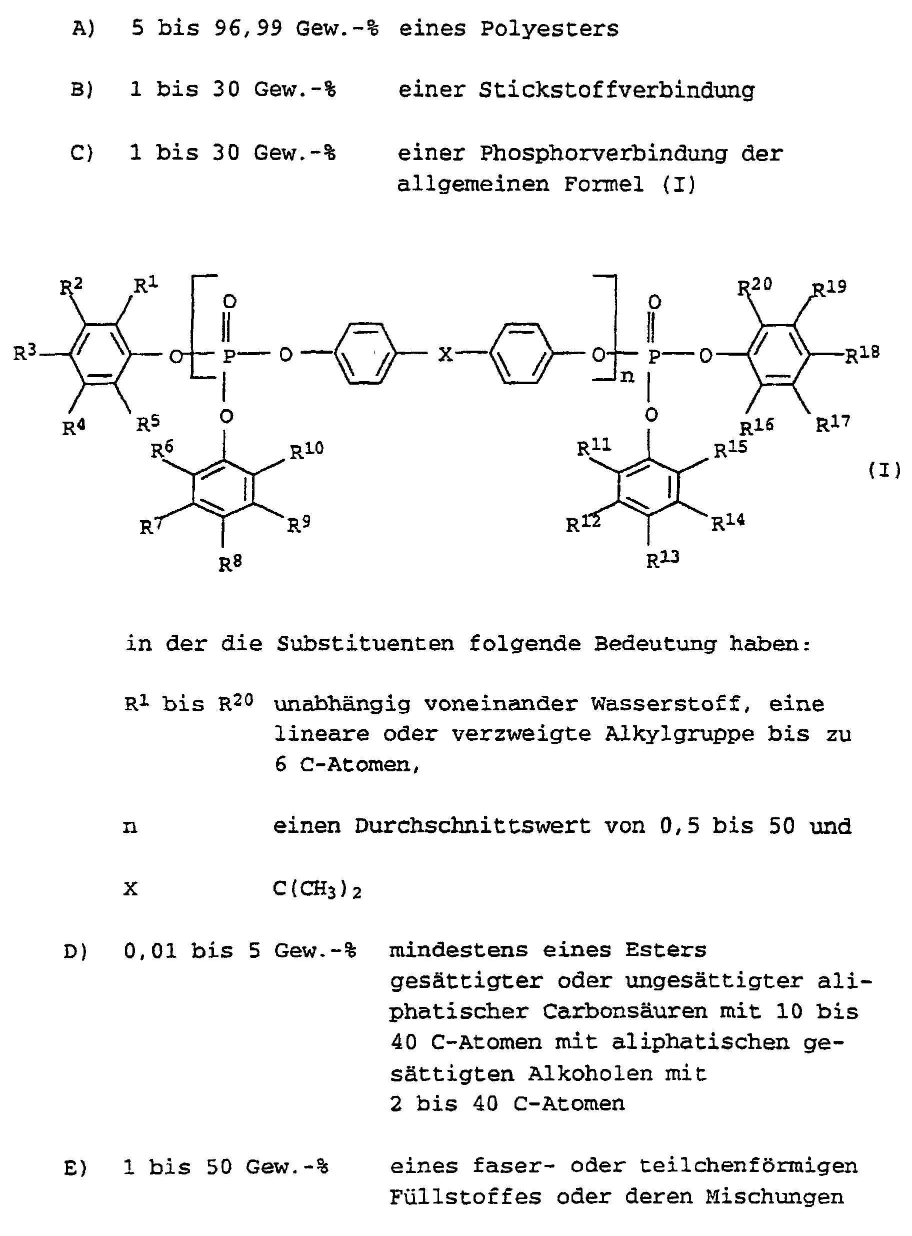

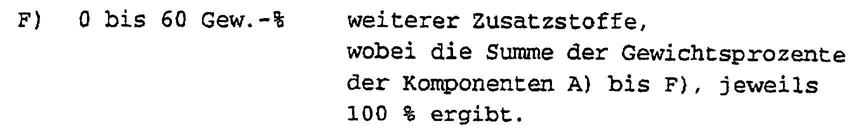

2. Thermoplastische Formmassen nach Anspruch 1, enthaltend Phosphorverbindungen C) der allgemeinen Formel I, in welcher R¹ bis R²⁰ Wasserstoff bedeuten.

3. Thermoplastische Formmassen nach Anspruch 1, enthaltend Phosphorverbindungen C) der allgemeinen Formel I, in welcher die Reste in ortho-Stellung zum Sauerstoff der Phosphatgruppe mindestens einen Methylrest darstellen.

4. Thermoplastische Formmassen nach den Ansprüchen 1 bis 3, enthaltend Phosphorverbindungen C) der allgemeinen Formel (I), in welcher n für einen Durchschnittswert von 0,5 bis 5 steht.

5. Thermoplastische Formmassen, nach den Ansprüchen 1 bis 4, enthaltend als Komponente C) Bisphenol-A-bis(diphenylphosphat).

6. Thermoplastische Formmassen nach den Ansprüchen 1 bis 4, in denen R¹ bis R²⁰ für Wasserstoff, X für C(CH₃)₂ und n für 0,5 - 5 in der allgemeinen Formel (I) steht.

7. Thermoplastische Formmassen nach den Ansprüchen 1 bis 6, enthaltend 15 bis 40 Gew.-% eines teilchen- oder faserförmigen Füllstoffes E).

8. Thermoplastische Formmassen nach den Ansprüchen 1 bis 7, in denen die Komponente D) Pentaerythrittetrastearat ist.

9. Thermoplastische Formmassen nach den Ansprüchen 1 bis 8, in denen die Komponente A) aus einer Mischung aus Polyethylenterephthalat und Polybutylenterephthalat besteht.

10. Verwendung der thermoplastischen Formmassen gemäß den Ansprüchen 1 bis 9, zur Herstellung von Fasern, Folien und Formkörpern.

11. Formkörper, erhältlich aus den thermoplastischen Formmassen gemäß den Ansprüchen 1 bis 9.

## Claims

1. A thermoplastic molding composition, comprising

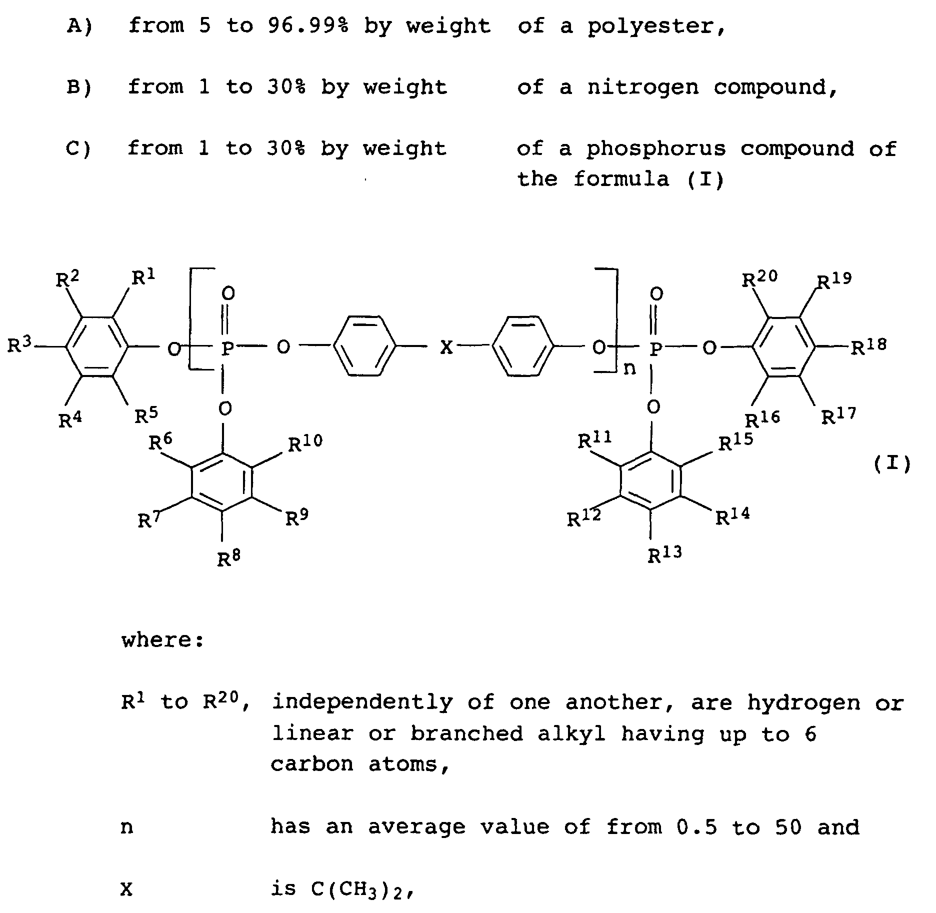

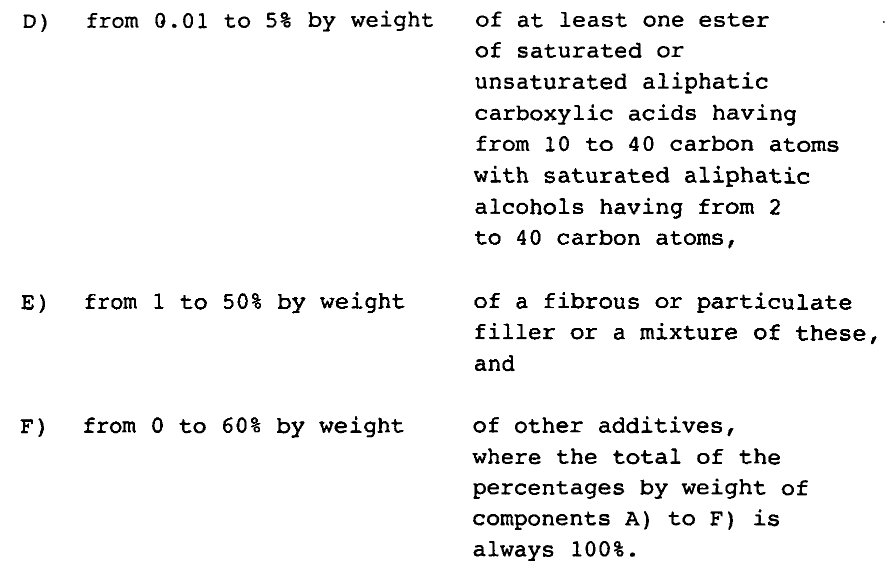

2. A thermoplastic molding composition as claimed in claim 1, comprising phosphorus compounds C) of the formula I in which R¹ to R²⁰ are hydrogen.

3. A thermoplastic molding composition as claimed in claim 1, comprising phosphorus compounds C) of the formula I, where at least one of the radicals in positions ortho to the oxygen of the phosphate group is a methyl radical.

4. A thermoplastic molding composition as claimed in any of claims 1 to 3, comprising phosphorus compounds C) of the formula I in which n has an average value of from 0.5 to 5.

5. A thermoplastic molding composition as claimed in any of claims 1 to 4, comprising, as component C), bisphenol A bis(diphenyl phosphate).

6. A thermoplastic molding composition as claimed in any of claims 1 to 4, where, in the formula I, R¹ to R²⁰ are hydrogen, X is C(CH₃)₂ and n is from 0.5 to 5.

7. A thermoplastic molding composition as claimed in any of claims 1 to 6, comprising from 15 to 40% by weight of a particulate or fibrous filler E).

8. A thermoplastic molding composition as claimed in any of claims 1 to 7, in which component D) is pentaerythritol tetrastearate.

9. A thermoplastic molding composition as claimed in any of claims 1 to 8, in which component A) is composed of a mixture made from polyethylene terephthalate and polybutylene terephthalate.

10. The use of the thermoplastic molding compositions as claimed in any of claims 1 to 9 for producing fibers, films or moldings.

11. A molding obtainable from the thermoplastic molding compositions as claimed in any of claims 1 to 9.

## Revendications

1. Masses de moulage thermoplastiques, contenant

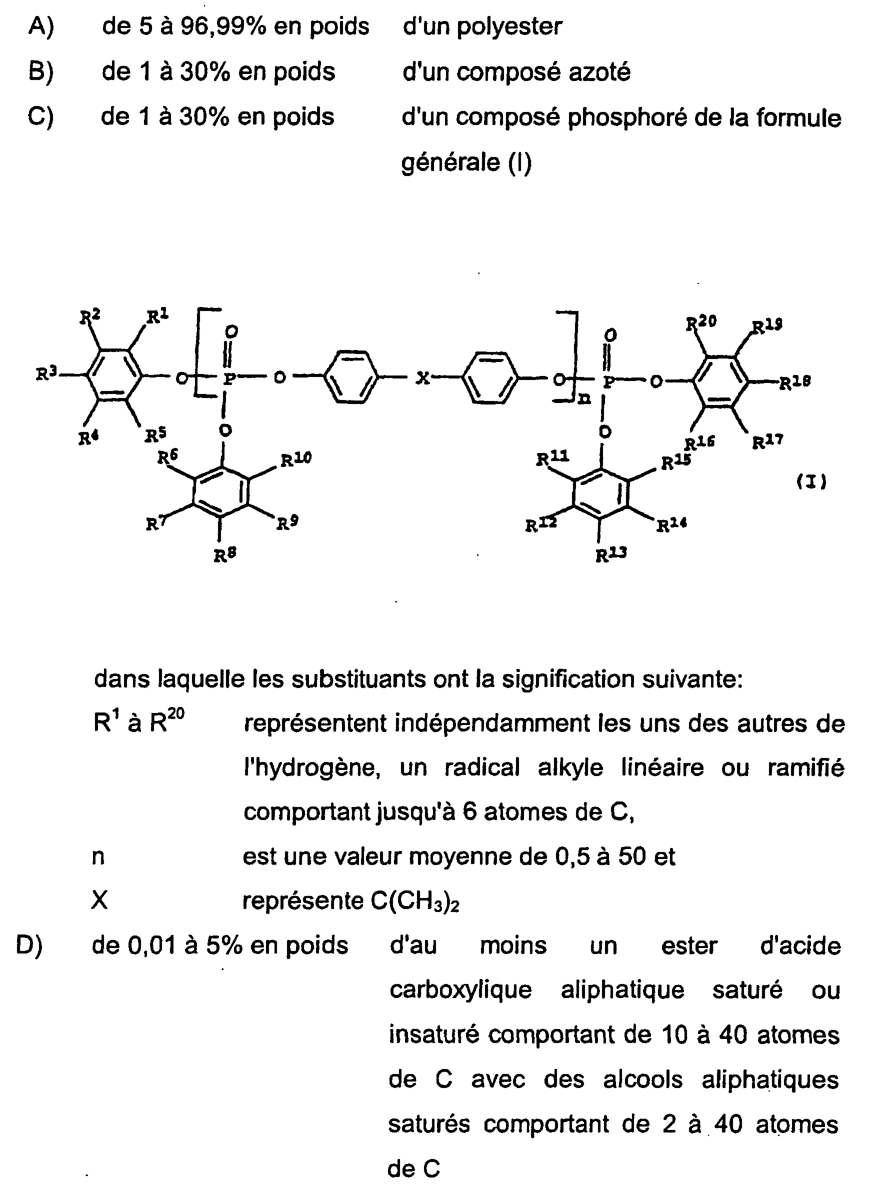

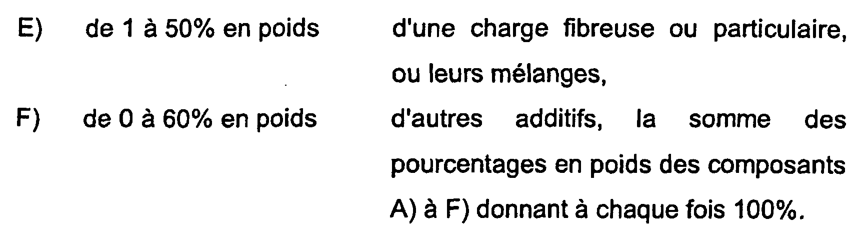

2. Masses de moulage thermoplastiques selon la revendication 1, contenant des composés phosphorés C) de la formule générale I, dans laquelle R¹ à R²⁰ représentent de l'hydrogène.

3. Masses de moulages thermoplastiques selon la revendication 1, contenant des composés phosphorés de la formule générale I, dans laquelle les restes en position ortho par rapport à l'oxygène du groupe phosphate représentent au moins un radical méthyle.

4. Masses de moulage thermoplastiques selon les revendications 1 à 3, contenant des composés phosphores C) de la formule générale 1, dans laquelle n représente une valeur moyenne de 0,5 à 5.

5. Masses de moulage thermoplastiques selon les revendications 1 à 4, contenant en tant que composant C) du bis(dlphénylphosphate) de Bisphénol A.

6. Masses de moulage thermoplastiques selon les revendications 1 à 4, dans lesquelles R¹ à R²⁰ représentent de l'hydrogène, X représente C(CH₃)₂ et n a une valeur de 0,5 à 5 dans la formule générale (I).

7. Masses de moulage thermoplastiques selon les revendications 1 à 6, contenant de 15 à 40% en poids d'une charge E) fibreuse ou particulaire.

8. Masses de moulage thermoplastiques selon les revendications 1 à 7, dans lesquelles le composant D) est du tétrastéarate de pentaérythrite.

9. Masses de moulage thermoplastiques selon les revendications 1 à 8, dans lesquelles le composant A) consiste en un mélange de polyéthylène téréphtalate et de polybutylène téréphtalate.

10. Utilisation des masses de moulage thermoplastiques selon les revendications 1 à 9 pour la production de fibres, feuilles et corps façonnés.

11. Corps façonnés que l'on peut obtenir à partir des masses de moulage thermoplastiques selon les revendications 1 à 9.
